# EUROPEAN PATENT SPECIFICATION

(11) **EP 2 573 479 B1**
(45) Date of publication and mention of the grant of the patent: **16.01.2019**
(21) Application number: 11009720.1
(22) Date of filing: 09.12.2011
(51) Int. Cl.: F24F 13/02, F16L 11/02

(54) **Duct member for air distribution**
Luftverteilungsrohr
Tuyau de distribution d'air

(30) Priority: 30.08.2011 CZ 201124777 U; 29.09.2011 CZ 201124901 U
(43) Date of publication of application: 27.03.2013
(73) Proprietor: Prihoda s.r.o., 53901 Hlinsko (CZ)
(72) Inventor: Bures, Michal, 53901 Hlinsko (CZ)
(74) Representative: Zemanová, Veronika

(56) References cited:
- EP-A1- 1 091 179
- EP-A2- 2 354 696
- WO-A1-2006/119399
- FR-A1- 2 787 558
- US-A1- 2006 199 501

## Description

### Field of art

The invention relates to a duct member for transportation and distribution of air, the duct member comprising a wall of a woven or nonwoven textile or of a foil with a perforated part, the wall being adapted for a passage of air and its distribution into the surroundings of the duct member.

### State of art

Known air ducts members for transportation and distribution of air made of woven or nonwoven fabric or of foil, also called textile diffusers, are made of material sewn together into closed shapes of different cross-sections. The cross-section is most likely circular but generally the shape comprises always a part of a circle, or a combination of several of such parts. Newly on the market there are textile ducts having square or triangular cross- section, described for example in the utility model No. 21618.The duct is in a certain way pervious for air and - in operation - it is inflated by the air flow, wherein the air is distributed by its being passed through the permeable material or through perforations. A correct distribution of air is one of the most important functions of air ducts.

A certain disadvantage of the known air duct may occur, especially in the areas with high longitudinal speed of the air supplied from the fan, which is usually near to the inlet area of the ducts. There, in the vast majority of cases, the air exits in a slanting direction from the perforated duct. This deviation from the ideal perpendicular exit direction may give rise to places which are not directly ventilated.

The goal of this technical solution is to develop a textile duct or a part of it, which would make a deflection of the flow of air possible so that the distribution becomes as far as possible perpendicular to the surface of the diffuser right from the beginning of the perforated area. At the same time it is necessary that the duct maintains the benefits of a textile or foil duct, especially the possibility of washing in a washing machine. EP2354696 discloses a duct having features defined in the preamble of claim 1 and having exterior deflecting elements abutting several of the discharge openings.

### Summary of the invention

These goals are solved and these deficiencies are largely eliminated by a duct member for transportation and distribution of air, the duct member comprising a wall of a woven or nonwoven textile or of a foil with a perforated part, the wall being adapted for a passage of air and its distribution into the surroundings of the duct member, wherein the duct member is provided with at least one inner deflecting element for directing the distributed air, wherein at least a part of the inner deflecting element sticks up into the interior of the duct member. Preferably, the deflecting element is made of a permeable or a perforated or a meshed material The efficiently designed inner deflecting element is designed for directing the distributed air, and thus for preventing or limiting an oblique air exit from the ducts. Due to the installation of an inner deflecting element which separates the air having a high longitudinal speed from the duct surface and which also allows a passage of air, the orientation of the flow of air exiting through the walls of the duct member is perpendicular. Using such inner deflecting elements in the area of all perforated parts of duct walls, the above mentioned negative effect is eliminated. Various combinations and shaping of the deflecting elements may influence the direction of the air exiting from the duct to some extent.

Preferably, the inner deflecting element formed by a highly permeable strip of a woven or nonwoven fabric or of a foil provided with a series of openings, through which the air passes. Considering the function, it is advantageous to use a rigid mesh comprising suitably designed openings. The attached deflecting layer is formed in such a way that its functional area is not in contact with the wall of the duct member. Preferably, the deflecting element is attached to the wall of the duct member along its whole length, directly in the area of the perforated part. It is also advantageous to attach the deflecting element forming strip to the duct member at several locations not much spaced from each other. That may be done e.g. by sewing. To make the layer to stick up, waves or draping may be formed. A bulging part is formed between the locations of attachment, the bulging part forming a cavity between the deflecting element and the perforated part of the wall.

According to a preferred embodiment the inner deflecting element is made of a screen, which is attached directly to the perforated part of the duct member.

According to the invention the deflecting element is in a form of a strip, which extends in the longitudinal direction of the duct member and it is attached to the perforated part at locations spaced evenly or unevenly from each other and in such a way that - in the areas between said locations - the deflecting element sticks up from the perforated part.

It is also possible to make the inner deflecting element of an airtight material. In that case the inner deflecting element is in a form of a strip having a variable width and extending in the longitudinal direction of the duct member and it is attached to the perforated part always with its extended area at evenly or unevenly spaced locations and in such a way that in the areas between said locations the deflecting element sticks up from the perforated part.

A very simple and in practice well applicable redirection of the angled air flow exiting from the duct member of the air ducts is achieved by the presented technical solution. The main advantage of the solution is the possibility to eliminate room zones of an imperfect air distribution.

### Brief description of the drawings

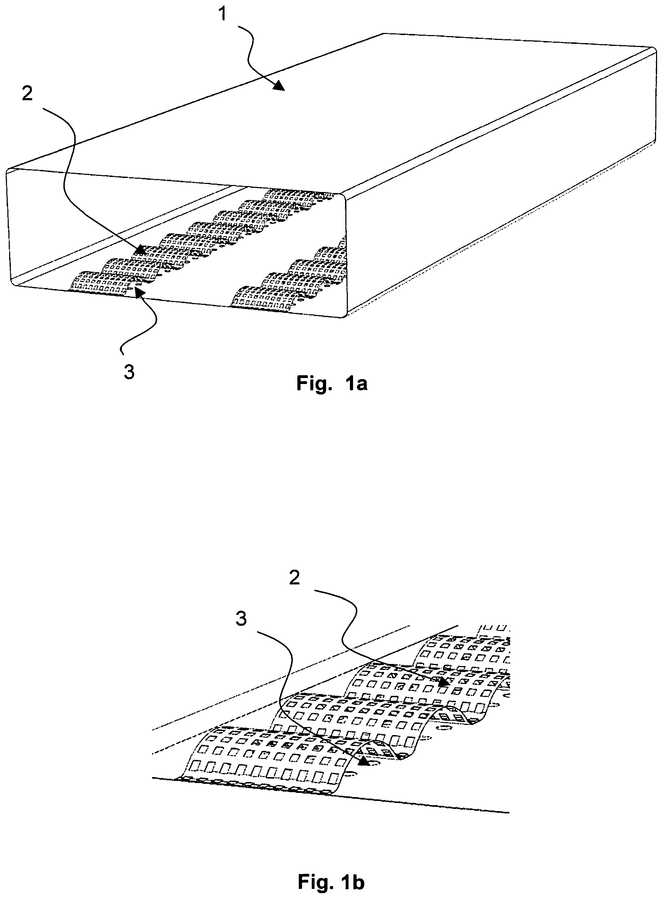

The invention is further explained by means of drawings. Fig. 1a shows a duct member according to this technical solution having a rectangular shape and comprising an installed inner deflecting element. Fig. 1b shows a detail of a meshed deflecting element, which is fastened to a perforated wall part of the duct member.

### Examples of the preferred embodiments

Fig. 1 a shows a duct member **1** of an air duct for transportation and distribution of air, the duct member being made of a woven fabric having a hose shape, in this particular case having a rectangular cross section. Two strips forming the deflecting elements **2** are sewn on the duct member **1** in its longitudinal direction and they are made of a meshed material and have a wavy shape, in other words, they are sewn to the perforated part **3** of the wall of the duct member **1** at evenly spaced locations always with an adjacent part of a wave, while the parts of the deflecting element **2** in between these two sawn locations always stick up from the wall into the interior of the duct member **1.** The deflecting elements **2** are placed directly on the perforated zone **3,** through which the supplied air is distributed.

The deflecting element **2** can also be made of a permeable material, for example of a textile material, or it may be made of a perforated material.

It is also possible to make the deflecting element **2** of airtight material. In that case, it may be advantageous to make the deflecting element **2** having a variable width and being attached to the wall of the duct member **1** with its extended area, while its narrow part rises into the interior of the duct member **1.** But it is also possible to attach the deflecting element **2** in other areas, for example in the narrow area. Or it can be attached in a narrowing area, so that such a deflecting element **2** forms waves, so that in the direction of air flow through the duct member **1** the waves have first sides (rising from the wall of the duct member **1**) and second sides (falling to the wall of the duct member **1**), wherein the first sides have a smaller width than the second sides. Another option is non uniform arrangement of the zones of fastening of the deflecting element **2,** whether in terms of spacing between the attachment zones, or in terms of its fastening area - the narrowing or the dilating area. The purpose of these arrangements is to facilitate the entry of air into the space between the wall of the duct member **1** and the adjusting member **2.** It is also possible to provide such a deflecting element **2** with extra perforations in some areas.

### Industrial applicability

The air ducts comprising inner deflecting elements according to the invention are industrially applicable for any installation, for which it is desirable to eliminate places with imperfect distribution of air caused by a slant exit of air resulting from natural physical air flow.

## Claims

1. A duct member (1) for transportation and distribution of air, the duct member comprising a wall of a woven or nonwoven textile or of a foil with a perforated part (3), the wall being adapted for a passage of air and its distribution into the surroundings of the duct member (1), wherein the duct member (1) is provided with at least one inner deflecting element (2) for directing the distributed air, **characterized in that** at least a part of the inner deflecting element (2) sticks up into the interior of the duct member (1), the inner deflecting element (2) is in the form of a strip, which extends in the longitudinal direction of the duct member (1) and it is attached to the perforated part (3) at locations spaced evenly or unevenly from each other and in such a way that - in the areas between said locations - the deflecting element (2) sticks up from the perforated part (3).

2. The duct member (1) according to claim 1, **characterized in that** the inner deflecting element (2) is made of a permeable and / or a perforated or meshed material.

3. The duct member (1) according to claim 1 or 2, **characterized in that** the inner deflecting element (2) is attached to the wall of the duct member (1) in the area of the perforated part (3) of the duct member (1) and / or in the area adjacent to the perforated part (3) of the duct member (1).

4. The duct member (1) according to claim 3, **characterized in that** at least one part of the inner deflecting element (2) extends along an adjacent perforated part (3) spaced apart therefrom to form at least one pocket in between the perforated part (3) and the deflecting element (2).

5. The duct member (1) according to claim 1, **characterized in that** the inner deflecting element (2) is made of an airtight material.

6. The duct member (1) according to claim 5, **characterized in that** the inner deflecting element (2) is in a form of a strip having a variable width and it is attached to the perforated part (3) always with its extended area at evenly or unevenly spaced locations and in such a way that in the areas between said locations the deflecting element (2) sticks up from the perforated part (3).

## Patentansprüche

1. Rohrleitungsbauteil (1) zur Beförderung und Verteilung von Luft, der eine aus einer gewebten oder ungewebten Textilie oder aus einer einen perforierten Bereich (3) beinhaltenden Folie hergestellte Wand umfasst, wobei die Wand zum Luftdurchgang und zur Verteilung der Luft in die Umgebung des Rohrleitungsbauteils (1), wobei der Rohrleitungsbauteil (1) mit wenigstens einem inneren Ablenkelement (2) zum Leiten der zu verteilenden Luft versehen ist, **dadurch gekennzeichnet, dass** zumindest ein Teil des inneren Ablenkelements (2) in den inneren Raum des Rohrleitungsbauteils (1) hineinragt, wobei das innere Ablenkelement (2) in der Form eines durch den Rohrleitungsbauteil (1) entlang dessen Längsrichtung hindurchgehenden Streifens vorgesehen ist und in regelmäßigen oder unregelmäßigen Abständen an dem perforierten Bereich (3) des Rohrleitungsbauteils derart angebracht ist, dass es in den zwischen den einzelnen Anbringungspunkten vorhandenen Zwischenräumen von dem perforierten Bereich (3) absteht.

2. Rohrleitungsbauteil (1) nach Anspruch 1, **dadurch gekennzeichnet, dass** das innere Ablenkelement (2) aus einem durchlässigen und/oder gelochten oder netzartigen Werkstoff besteht.

3. Rohrleitungsbauteil (1) nach Anspruch 1 oder 2, **dadurch gekennzeichnet, dass** das innere Ablenkelement (2) an der Wand des Rohrleitungsbauteils (1) in dem perforierten Bereich (3) des Rohrleitungsbauteils (1) und/oder in einem anderen, sich an den perforierten Bereich (3) des Rohrleitungsbauteils (1) anschließenden Bereich befestigt ist.

4. Rohrleitungsbauteil (1) nach Anspruch 3, **dadurch gekennzeichnet, dass** das wenigstens ein Teil des inneren Ablenkelements (2) entlang dem perforierten Bereich (3) und beabstandet davon angeordnet ist, wodurch wenigstens ein Hohlraum zwischen dem perforierten Bereich (3) und dem Ablenkelement (2) gebildet ist.

5. Rohrleitungsbauteil (1) nach Anspruch 1, **dadurch gekennzeichnet, dass** das innere Ablenkelement (2) aus einem undurchlässigen Werkstoff besteht.

6. Rohrleitungsbauteil (1) nach Anspruch 5, **dadurch gekennzeichnet, dass** das innere Ablenkelement (2) in der Form eines Streifens mit veränderlicher Breite vorgesehen ist, welcher Streifen in regelmäßigen oder unregelmäßigen Abständen mit seinen erweiterten Teilen an dem perforierten Bereich (3) des Rohrleitungsbauteils derart angebracht ist, dass es mit seinen verjüngten Teilen von dem perforierten Bereich (3) in den zwischen den einzelnen Anbringungspunkten vorhandenen Zwischenräumen absteht.

## Revendications

1. Un élément (1) de tuyauterie pour transporter et distribuer de l'air, comprenant une paroi en textile tissé ou non tissé ou en une feuille avec une partie (3) perforée, la paroi étant adaptée pour faire passer de l'air et le distribuer aux environs de l'élément (1) de tuyauterie, l'élément (1) de tuyauterie étant pourvu d'au moins un élément (2) interne d'acheminement pour acheminer l'air distribué, **caractérisé en ce qu'**au moins une partie de l'élément (2) d'acheminement interne saillie dans l'espace intérieur de l'élément (1) de tuyauterie, l'élément (2) d'acheminement interne ayant la forme d'une bande, qui s'étend dans la direction longitudinale de l'élément (1) de tuyauterie et est fixé à la partie (3) perforée dans des lieux qui sont espacés régulièrement ou irrégulièrement, de telle sorte que dans les régions situées parmi ledites lieux l'élément (2) d'acheminement saillie de la partie (3) perforée.

2. L'élément (1) de tuyauterie selon la revendication 1, **caractérisé en ce que** l'élément d'acheminement (2) interne est constitué d'un matériau perméable et / ou perforé ou maillé.

3. L'élément (1) de tuyauterie selon la revendication 1 ou 2, **caractérisé en ce que** l'élément (2) d'acheminement interne est fixé à la paroi de l'élément (1) de tuyauterie dans la région de la partie (3) perforée de l'élément (1) de tuyauterie et/ou dans la région adjacente à la partie (3) perforée de l'élément (1) de tuyauterie.

4. L'élément (1) de tuyauterie selon la revendication 3, **caractérisé en ce qu'**au moins une partie de l'élément (2) d'acheminement interne passe le long de la partie (3) perforée adjacente qui est espacé de celui-ci, pour former au moins une cavité entre la partie (3) perforée et l'élément (2) d'acheminement.

5. L'élément (1) de tuyauterie selon la revendication 1, **caractérisé en ce que** l'élément (2) d'acheminement interne est fait d'un matériau imperméable.

6. L'élément (1) de tuyauterie selon la revendication 5, **caractérisé en ce que** l'élément (2) d'acheminement interne se présente sous la forme d'une bande de largeur variable et est fixé à la partie (3) perforée toujours avec sa région d'élargissement aux lieux éspacés régulièrement ou irrégulièrement et de telle sorte que dans les régions situées parmi ledites lieux l'élément (2) d'acheminement saillie de la partie (3) perforée.
